# EUROPÄISCHE PATENTSCHRIFT

(11) **EP 1 228 377 B1**
(45) Veröffentlichungstag und Bekanntmachung des Hinweises auf die Patenterteilung: **21.04.2010**
(21) Anmeldenummer: 00966124.0
(22) Anmeldetag: 06.10.2000
(51) Int. Cl.: G01P 3/48, G01P 3/487, G01P 3/488

(54) **EINGANGSSCHALTUNG FÜR INDUKTIVEN DREHZAHLGEBER**
INPUT CIRCUIT FOR INDUCTIVE ENGINE SPEED SENSOR
CIRCUIT D'ENTREE POUR TRANSMETTEUR DE VITESSE INDUCTIF

(30) Priorität: 11.11.1999 DE 19954115
(43) Veröffentlichungstag der Anmeldung: 07.08.2002
(73) Patentinhaber: Bayerische Motoren Werke Aktiengesellschaft, 80809 München (DE)
(72) Erfinder: SEIDENFUSS, Thomas, 85305 Jetzendorf (DE)
(86) Internationale Anmeldenummer: PCT/EP2000/009798
(87) Internationale Veröffentlichungsnummer: WO 2001/035108

(56) Entgegenhaltungen:
- DE-A- 3 605 995
- DE-A- 3 930 895
- DE-A- 19 512 613
- US-A- 5 450 008

## Beschreibung

Die Erfindung betrifft eine Eingangsschaltung für einen induktiven Drehzahlgeber gemäß dem Oberbegriff des Anspruchs 1.

Beispielsweise zur Erfassung der Kurbelwellenposition werden in vielen Verbrennungsmotoren Geberräder mit induktiven Sensoren eingesetzt. Solche induktiven Sensoren sind nicht nur robust und bis zu sehr hohen Temperaturen einsetzbar sondern auch überaus preiswert. Allerdings ist die Amplitude des Signals drehzahlabhängig und überdeckt einen Bereich von einigen Millivolt bis zu über 100 Volt. Um einerseits kleine Amplituden bei niederen Drehzahlen erkennen zu können, andererseits aber während des normalen Motorlaufs, also wenn hohe Amplituden anliegen, eine möglichst hohe Störsicherheit zu erreichen, werden üblicherweise elektronische Schaltungen eingesetzt, welche entweder die anliegende Sensorspannung in einer oder mehren Stufen herunterteilen oder die Schaltschwellen von auswertenden Komperatoren umschalten. Beide genannten Verfahren messen den mittleren Pegel der Sensorspannung und schalten davon abhängig ihre Auswertung um.

Nachteilig hierbei ist, daß ein relativ hoher Schaltungsaufwand betrieben werden muß, um die mittlere Amplitude des Signals zu bestimmen, die Schwellen bzw. Teiler umzuschalten, eine Hysterese für die Umschaltung bereitzustellen und unerwünschte zusätzliche Flanken, die bei einer Rückschaltung in dem empfindlicheren Bereich auftreten können, zu verhindern. Vielfach kommen deswegen speziell entwickelte und teure sog. ASIC's zum Einsatz.

Aus der US-A-5 450 008 ist eine Eingangsschaltung für einen induktiven Drehzahlgeber in einem Kraftfahrzeug mit einem Motor mit einem ersten und einem zweiten Schaltungseingang bekannt. Jeder der Eingänge ist mit einem Eingang eines Komparators, der zur Auswertung der Signale des induktiven Drehzahlgebers dient, verbunden. Die Eingangschaltung weist einen schaltbaren Spannungsteiler mit zwei Widerständen auf. Der erste Schaltungseingang ist über den ersten Widerstand mit dem ersten Eingang des Komparators und der zweite Schaltungseingang ist über einen mittels einer Schalteinrichtung abkoppelbaren zweiten Widerstand ebenfalls mit dem ersten Eingang des Komparators verbunden. Die Schalteinrichtung schaltet spannungsabhängig, um die Ausgangsspannung stets auf einen Bereich von 0 bis 5 Volt zu begrenzen.

Aufgabe der Erfindung ist es, eine Eingangsschaltung der eingangs genannten Art anzugeben, bei der mit einfachsten Mitteln eine hohe Eingangsempfindlichkeit in der Startphase und ein guter Störabstand während eines normalen Motorbetriebserzielt werden können.

Diese Aufgabe wird durch die im Anspruch 1 genannten Merkmale gelöst.

Ein Kerngedanke der Erfindung besteht darin, einen Teiler einer Signalamplitude nicht mehr aufgrund eines Sensorsignalmittelwertes sondern drehzahlabhängig umzuschalten. Bei einer genauen Analyse der oben genannten Problematik hat man festgestellt, dass die niedrigen Amplituden im Wesentlichen nur beim Startvorgang auftreten, also wenn der Anlasser des Motors mit teilweise unter 100 U/min dreht. Springt der Motor jedoch an, wird innerhalb kürzester Zeit die Leerlaufdrehzahl erreicht. Die Leerlaufdrehzahlen liegen jedoch im Bereich von etwa 500 bis 1.000 U/min. Bei dieser Drehzahl hat das Gebersignal etwa die 10fache Amplitude gegenüber der Anfangsamplitude erreicht. Über den ganzen restlichen Drehzahlbereich ändert sich die Amplitude wiederum maximal noch um einen Faktor 10. Diese Drehzahlabhängigkeit der Signalamplitude wird bei der vorliegenden Erfindung ausgenutzt.

Insbesondere kann die Drehzahl von einem Mikrocontroller der Motorsteuerung, wo diese Größe bereits vorhanden ist, bereitgestellt werden. Auch die Drehzahlschwellen und die Schalthysterese lassen sich mit der vorliegenden Erfindung einfach anpassen.

Berücksichtigt man darüber hinaus noch, dass die Eingangsempfindlichkeit nur in der Startphase notwendig ist, so genügt eine einfache Umschaltschwelle, um eine ausreichende Störsicherheit während eines normalen Motorbetriebs zu gewährleisten.

Weitere Merkmale sind in den abhängigen Ansprüchen definiert.

Die Erfindung wird nachfolgend anhand eines speziellen Ausführungsbeispiels und mit Bezug auf die einzige beiliegende Zeichnung näher erläutert.

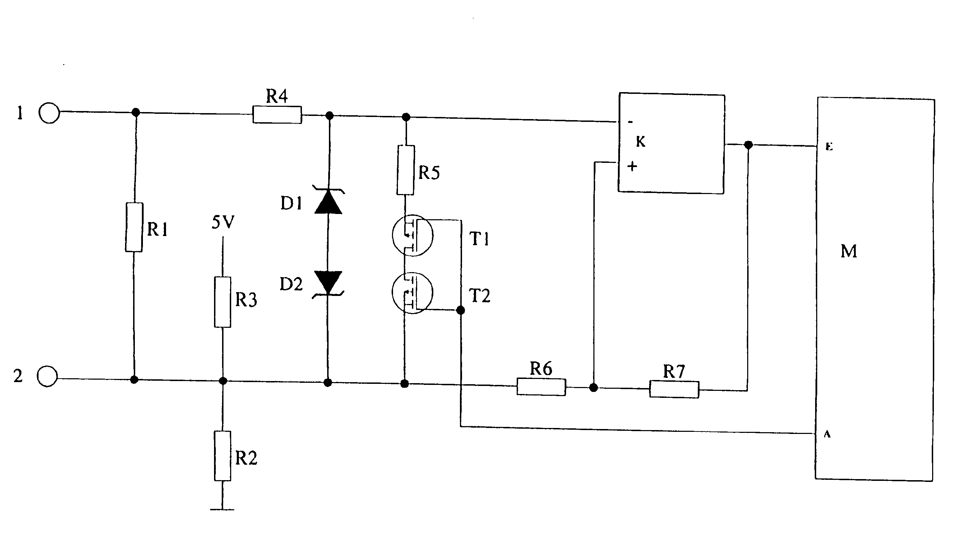

Die einzige Zeichnung zeigt eine erfindungsgemäße Eingangsschaltung mit zwei Schaltungseingängen (oder Steckerpins) 1, 2, an die ein (nicht dargestellter) induktiver Geber angeschlossen werden kann. Die beiden Schaltungseingänge 1 und 2 sind über einen Widerstand R1 belastet.

Überdies ist der Schaltungseingang 2 mit einem aus den Widerständen R2 und R3 bestehenden Spannungsteiler derart verbunden, daß der Widerstand R2 den Schaltungseingang 2 mit Masse und der Widerstand R3 den Schaltungseingang 2 mit einer konstanten Spannung von 5V verbindet. Über den aus den Widerständen R2 und R3 bestehenden Spannungsteiler wird der Bezugspegel des Gebers angehoben, so daß negative Amplituden durch einen Komperator K detektiert werden können.

Der Schaltungseingang 1 ist über einen Widerstand R4 mit einem ersten Eingang (-) des Komperators K verbunden. Zwischen dem Widerstand R4 und dem zweiten Schaltungseingang 2 sind zwei gegeneinander geschaltete Zenerdioden D1 und D2 angeordnet, die zusammen mit dem Widerstand R4 den Komperator K vor einer zu hohen Eingangsspannung schützt.

Der zweite Eingang (+) des Komperators K ist über einen Widerstand R6 mit dem Schaltungseingang 2 verbunden. Überdies ist der zweite Eingang (+) des Komperators K über einen Widerstand R7 mit dem Ausgang des Komperators K verbunden. Mit den beiden Widerständen R6 und R7 ist eine Schalthysterese festgelegt.

Der Ausgang des Komperators K ist mit einem Mikrocontroller M verbunden (Eingang E), der zur Auswertung des Gebersignals dient. Der Mikrocontroller M steuert dann wiederum über diese Geberinformation den Motor.

Zwischen dem Widerstand R4 und dem Schaltungseingang 2 sind nun ein weiterer Widerstand R5 sowie zwei P-Kanal Mosfetttransistoren T1 und T2 geschaltet. Somit ist der erste Eingang (-) des Komperators K über den Widerstand R4 mit dem Schaltungseingang 1 und über die aus dem Widerstand R5 und den beiden Mosfetttransistoren T1 und T2 bestehende Kombination mit dem Schaltungseingang 2 verbunden. Über die Kombination der Bauteile R4, R5, T1 und T2 kann eine schaltbarer Spannungsteiler und somit eine steuerbare Amplitudenreduzierung am Komperator K realisiert werden. Die beiden Mosfetttransistoren T1 und T2 sind wegen der negativen Sensorspannungen notwendig und sowohl in Serie angeordnet als auch in unterschiedlichen Schaltrichtungen ausgerichtet. Die Eingänge der beiden Mosfetttransistoren T1 und T2 sind mit einem Ausgang A des Mikrocontrollers M verbunden und über diesen gesteuert. Im vorliegenden Fall liefert der induktive Sensor bei etwa 100 U/min +/- 1,3 Volt. Bei 1.000 U/min werden +/- 12,7 Volt erzeugt. Die Schaltschwelle des Komperators liegt etwa bei +/- 1,2 Volt. Werden Widerstandswerte von 51,1 kΩ für R4 und 11,5 kΩ für R5 verwendet, so ergeben sich Schaltschwellen, die um einen Faktor 5 höher liegen, also etwa bei +/- 6 Volt. Diese Schwelle bietet einen guten Signal-Störabstand.

Wird nun das Fahrzeug gestartet und damit der Mikrocontroller M bestromt, schaltet er die beiden Mosfetttransistoren T1 und T2 zunächst über seinen Ausgangspin A in einen hochohmigen Zustand. Das von dem (nicht dargestellten) induktiven Sensor bzw. Geber stammende Sensorsignal liegt damit ungedämpft am Komperator K an. Hohe Amplituden werden jedoch durch die beiden Dioden D1 und D2 begrenzt.

Der Mikrocontroller M wertet das von dem Komperator K kommende digitalisierte Signal aus und gibt ein Signal aus, falls die festgelegte Drehzahlschwelle überschritten wird. Damit schaltet der Mikrocontroller M die Mosfetttransistoren T1 und T2 niederohmig, so daß durch den dann wirksamen, aus den Widerständen R4 und R5 bestehenden Spannungsteiler das Sensorsignal am Komperator K reduziert wird. Die Drehzahlerfassung ist dann unempfindlicher gegenüber Störungen auf dem Sensorsignal. Die Widerstände werden - wie oben angegeben - so ausgewählt, daß selbst unter schlechtesten Bedingungen der Signalpegel am Komperator K für ein sicheres Schalten ausreicht. Die Umschaltdrehzahl liegt am günstigsten unterhalb der Leerlaufdrehzahl um ein Hin- und Herschalten während des Motorlaufs zu verhindern.

Mit der vorliegenden Erfindung kann mit einfachsten Mitteln eine hohe Eingangsempfindlichkeit während der Startphase und ein guter Störabstand während des Motorbetriebs erzielt werden. Gegenüber einer herkömmlichen Lösung mit einem sog. ASIC sind signifikante Kosteneinsparungen zu verzeichnen.

## Patentansprüche

1. Kraftfahrzeug mit einem Motor und einer Eingangsschaltung für einen induktiven Drehzahlgeber des Motors mit einem ersten und einem zweiten Schaltungseingang (1,2), die jeweils mit einem Eingang eines Komparators (K), der zur Auswertung der Signale des induktiven Drehzahlgebers dient, verbunden sind, und mit einem schaltbaren Spannungsteiler, umfassend zwei Widerstände (R4, R5), wobei der erste Schaltungseingang (1) über den ersten Widerstand (R4) mit dem ersten Eingang des Komparators (K) und der zweite Schaltungseingang (2) über den mittels einer Schalteinrichtung (T1, T2) abkoppelbaren zweiten Widerstand (R5) ebenfalls mit dem ersten Eingang des Komparators (K) verbunden ist, **dadurch gekennzeichnet, dass** die Schalteinrichtung (T1, T2) derart drehzahlabhängig schaltbar ist, dass der zweite Widerstand (R5) bei einem Drehzahlwert oberhalb einer vorgegebenen Drehtahl, welche unter der Leerlaufdrehzahl des Motors liegt, mit dem zweiten Schaltungseingang (2) verbunden ist und bei einem Dreh Zahlwert unterholb der vorgegebenen Drehzahl von dem zweiten Schaltungseingang abgekoppelt ist.

2. Kraftfahrzeug nach Anspruch 1, **dadurch gekennzeichnet, dass** das Schaltelement aus zumindest einem Transistor (T1, T2) besteht, der mit einer Steuereinrichtung (M) verbunden ist, die den Transistor (T1, T2) bei niedriger Drehzahl sperrt und bei hoher Drehzahl auf Durchlass schaltet.

3. Kraftfahrzeug nach Anspruch 1 oder 2, **dadurch gekennzeichnet, dass** als Transistor (T1, T2) ein P-Kanal Mosfettransistor vorgesehen ist.

4. Kraftfahrzeug nach Anspruch 2 oder 3, **dadurch gekennzeichnet, dass** zwei Transistoren (T1, T2) vorgesehen sind, die mit unterschiedlicher Schaltrichtung angeordnet sind.

5. Kraftfahrzeug nach einem der vorhergehenden Ansprüche, **dadurch gekennzeichnet, dass** ein aus zwei Widerständen (R2, R3) bestehender Spannungsteiler vorgesehen ist, wobei der Widerstand (R3) den zweiten Schaltungseingang (2) mit einer bestimmten Konstantspannung und der andere Widerstand (R4) den zweiten Schaltungseingang (2) mit Masse verbindet.

6. Kraftfahrzeug nach einem der vorhergehenden Ansprüche, **dadurch gekennzeichnet, dass** ein Widerstand (R6) vorgesehen ist, über dem der zweite Eingang des Komparators (K) mit dem zweiten Schaltungseingang (2) verbunden ist, und ein Widerstand (R7) vorgesehen ist, über den der zweite Eingang des Komparators (K) mit seinem Ausgang verbunden ist.

7. Kraftfahrzeug nach einem der vorhergehenden Ansprüche, **dadurch gekennzeichnet, dass** zwei gegeneinander geschaltete Zenerdioden (D1, D2) zwischen dem ersten und dem zweiten Schaltungseingang (1,2) vorgesehen sind.

## Claims

1. A motor vehicle with a motor and an input circuit for an inductive speed sensor of the motor with a first and a second circuit input (1, 2), which are in each case connected to an input of a comparator (K), which is used to evaluate the signals of the inductive speed sensor, and with a switchable voltage divider, comprising two resistors (R4, R5), wherein the first circuit input (1) is connected by means of the first resistor (R4) to the first input of the comparator (K) and the second circuit input (2) is also connected to the first input of the comparator (K) by means of the second resistor (R5) which can be decoupled by means of a switching device (T1, T2), **characterised in that** the switching device (T1, T2) can be switched as a function of speed in such a way that the second resistor (R5) is connected to the second circuit input (2) at a speed value above a predetermined speed, which is below the idle speed of the motor, and at a speed value below the predetermined speed, is decoupled from the second circuit input.

2. A motor vehicle according to claim 1, **characterised in that** the switching element consists of at least one transistor (T1, T2), which is connected to a control device (M), which blocks the transistor (T1, T2) at low speed and switches it to the on state at a high speed.

3. A motor vehicle according to claim 1 or 2, **characterised in that** a P-channel MOS-FET transistor is provided as the transistor (T1, T2).

4. A motor vehicle according to claim 2 or 3, **characterised in that** two transistors (T1, T2) are provided, which are arranged with a different switching direction.

5. A motor vehicle according to any one of the preceding claims, **characterised in that** a voltage divider comprising two resistors ( R2, R3) is provided, the resistor (R3) connecting the second circuit input (2) to a certain constant voltage and the other resistor (R4) connecting the second circuit input (2) to earth.

6. A motor vehicle according to any one of the preceding claims, **characterised in that** a resistor (R6) is provided, by means of which the second input of the comparator (K) is connected to the second circuit input (2), and a resistor (R7) is provided, by means of which the second input of the comparator (K) is connected to its output.

7. A motor vehicle according to any one of the preceding claims, **characterised in that** two Zener diodes (D1, D2) connected with opposite polarities are provided between the first and the second circuit input (1, 2).

## Revendications

1. Véhicule automobile équipé d'un moteur et d'un circuit d'entrée pour un générateur inductif de vitesse de rotation du moteur, ayant une première et une seconde entrée de circuit (1, 2), reliées chacune à une entrée d'un comparateur (K) servant à exploiter les signaux du générateur inductif de vitesse de rotation, ainsi qu'
un diviseur de tension commutable composé de deux résistances (R4, R5),
la première entrée de circuit (1) étant reliée par la première résistance (R4) à la première entrée du comparateur (K), et la seconde entrée (2) du circuit étant reliée par une installation de commutation (T1, T2) à la seconde résistance (R5), découplable également de la première entrée du comparateur (K),
**caractérisé en ce que**
l'installation de commutation (T1, T2) est commutable en fonction de la vitesse de rotation de façon que
pour une vitesse de rotation supérieure à une vitesse de rotation prédéfinie inférieure à la vitesse de rotation de ralenti du moteur, la seconde résistance (R5) est reliée à la seconde entrée (2) du circuit, et
pour une vitesse de rotation située en dessous de la vitesse de rotation prédéfinie, cette résistance est coupée de la seconde entrée du circuit.

2. Véhicule automobile selon la revendication 1,
**caractérisé en ce que**
l'installation de commutation se compose d'au moins un transistor (T1, T2) relié à une installation de commande (M) qui bloque le transistor (T1, T2) pour une vitesse de rotation faible, et débloque le transistor pour une vitesse de rotation élevée.

3. Véhicule automobile selon la revendication 1 ou 2,
**caractérisé en ce que**
le transistor (T1, T2) est un transistor mosfet à canal P.

4. Véhicule automobile selon la revendication 2 ou 3,
**caractérisé en ce qu'**
il comporte deux transistors (T1, T2) montés avec des sens passants, différents.

5. Véhicule automobile selon l'une des revendications précédentes,
**caractérisé par**
un diviseur de tension formé de deux résistances (R2, R3),
la résistance (R3) reliant la seconde entrée de circuit (2) à une tension constante déterminée, et l'autre résistance (R4) reliant la seconde entrée de circuit (2) à la masse.

6. Véhicule automobile selon la revendication 1,
**caractérisé par**
une résistance (R6) par laquelle la seconde entrée du comparateur (K) est reliée à la seconde entrée (2) du circuit, et une résistance (R7) est prévue pour relier la seconde entrée du comparateur (K) à sa sortie.

7. Véhicule automobile selon l'une des revendications précédentes,
**caractérisé en ce que**
deux diodes Zener (D1, D2) branchées en opposition, sont prévues entre la première et la seconde entrée (1, 2) du circuit.
